# EUROPEAN PATENT SPECIFICATION

(11) **EP 4 012 294 B1**
(45) Date of publication and mention of the grant of the patent: **04.02.2026**
(21) Application number: 21212789.8
(22) Date of filing: 07.12.2021
(51) Int. Cl.: F25B 13/00, F25B 49/00, F25B 49/02

(54) **AIR CONDITIONER AND METHOD OF CONTROLLING THE SAME**
KLIMAANLAGE UND VERFAHREN ZUR STEUERUNG DAVON
CLIMATISATION ET PROCÉDÉ DE COMMANDE CORRESPONDANT

(30) Priority: 11.12.2020 KR 20200173491
(43) Date of publication of application: 15.06.2022
(73) Proprietor: LG Electronics Inc., SEOUL 07336 (KR)
(72) Inventor: JANG, Jiyoung, 08592 Seoul (KR); SA, Yongcheol, 08592 Seoul (KR); SONG, Chiwoo, 08592 Seoul (KR)
(74) Representative: Vossius & Partner Patentanwälte Rechtsanwälte mbB

(56) References cited:
- EP-A1- 3 467 406
- US-A1- 2020 011 580

## Description

### BACKGROUND OF THE INVENTION

### 1. Field of the invention

The present invention relates to an air conditioner and a method of controlling the same, and more particularly to an air conditioner capable of minimizing an amount of refrigerant leaking into an indoor space when refrigerant leakage occurs in an indoor unit, and a method of controlling the same.

### 2. Description of the Related Art

Generally, an air conditioner is a cooling and heating system for cooling a room by sucking in hot air from the room and heat exchanging the air with a low-temperature refrigerant and then discharging the heat exchanged air into the room, or for heating a room by sucking in cold air from the room and heat exchanging the air with a high-temperature refrigerant and then discharging the heat exchanged air into the room. The air conditioner is an apparatus that forms a series of cycles consisting of a compressor, a condenser, an expansion valve, and an evaporator.

Examples of the air conditioner include an air conditioner in which one indoor unit is connected to one outdoor unit, a multi-type air conditioner in which a plurality of indoor units are connected to one or more outdoor units, thereby producing the same effect as in the case where multiple air conditioners are installed, and the like.

Meanwhile, the multi-type air conditioner has a problem in that when refrigerant leakage occurs in refrigerant pipes connected to indoor units, a large amount of refrigerant remains stagnant in a narrow confined space, causing severe damage to the body of people in the indoor space.

Accordingly, in an existing method, the leakage of refrigerant into the indoor space may be blocked by closing a shut-off valve disposed on the inlet and outlet side of an indoor unit, in which the refrigerant leakage occurs. However, the existing method has a problem in that it takes a predetermined time until the shut-off valve is actually closed, and the refrigerant may leak into the indoor space while the shut-off valve is actually closed.

US2020011580A1 discloses an air conditioner according to the preamble of independent claim 1; and a method according to the preamble of independent claim 8.

### SUMMARY OF THE INVENTION

In order to achieve the above objects, it is an object of the present invention to provide an air conditioner capable of minimizing an amount of refrigerant leaking into an indoor space while a shut-off valve is closed, when refrigerant leakage is sensed in an indoor unit.

It is another object of the present invention to provide an air conditioner capable of operating indoor units, except an indoor unit in which refrigerant leakage occurs, after blocking a refrigerant from leaking into the indoor units of a multi-type air conditioner.

The objects of the present invention are not limited to the aforementioned objects and other objects not described herein will be clearly understood by those skilled in the art from the following description.

In accordance with an aspect of the present invention, the above and other objects can be accomplished by providing an air conditioner according to independent claim 1.

In accordance with yet another aspect of the present invention, the above and other objects can be accomplished by providing a method of controlling an air conditioner according to independent claim 8. Further preferred embodiments of the invention are defined by the appended dependent claims.

Other detailed matters of the exemplary embodiments are included in the detailed description and the drawings.

### BRIEF DESCRIPTION OF THE DRAWINGS

FIG. 1 is a diagram illustrating a configuration of an air conditioner according to an embodiment of the present invention.
FIG. 2 is an exemplary diagram illustrating a refrigerant flow during a heating operation of an air conditioner according to an embodiment of the present invention.
FIG. 3 is an exemplary diagram illustrating a refrigerant flow during a cooling operation of an air conditioner according to an embodiment of the present invention.
FIG. 4 is a block diagram illustrating a controller and related components according to an embodiment of the present invention.
FIG. 5 is a flowchart illustrating a method of controlling an air conditioner when refrigerant leakage occurs in an indoor unit during a heating operation of the air conditioner according to an embodiment of the present invention.
FIG. 6 is a flowchart illustrating a method of controlling an air conditioner when refrigerant leakage occurs in an indoor unit during a cooling operation of the air conditioner according to an embodiment of the present invention.

### DETAILED DESCRIPTION OF THE PREFERRED EMBODIMENTS

Advantages and features of the present disclosure and methods of accomplishing the same will be more clearly understood from exemplary embodiments described below with reference to the accompanying drawings. However, the present disclosure is not limited to the following embodiments but may be implemented in various different forms. The embodiments are provided only to complete disclosure of the present disclosure and to fully provide a person having ordinary skill in the art to which the present disclosure pertains with the category of the present disclosure, and the present invention will be defined by the scope of the appended claims. Wherever possible, like reference numerals generally denote like elements through the specification.

The terminology used in the present disclosure is for the purpose of describing particular embodiments only and is not intended to limit the disclosure. As used in the disclosure and the appended claims, the singular forms are intended to include the plural forms as well, unless context clearly indicates otherwise. It will be further understood that the terms "comprises" and/or "comprising," when used in this specification, specify the presence of stated components, steps, and/or operations, but do not preclude the presence or addition of one or more other components, steps, and/or operations.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinafter, embodiments of the present disclosure will be described with reference to the accompanying drawings for explaining an air conditioner.

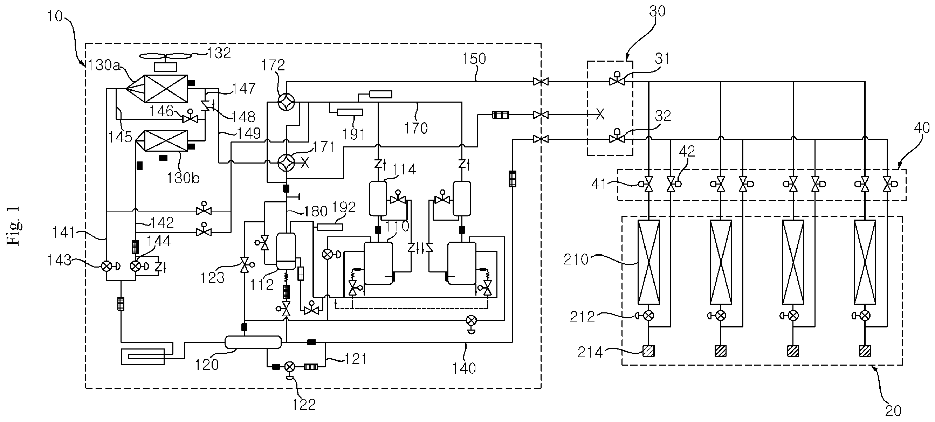

FIG. 1 is a diagram illustrating a configuration of an air conditioner according to an embodiment of the present invention

Hereinafter, a configuration of an air conditioner according to an embodiment of the present invention j will be described with reference to FIG. 1.

An air conditioner 1 according to an embodiment of the present invention includes an outdoor unit 10 installed outdoors, an indoor unit 20 installed indoors, a total valve 30 disposed between the outdoor unit 10 and the indoor unit 20, and a shut-off valve 40 disposed at an inlet and an outlet of the indoor unit 20.

The outdoor unit 10 includes: a compressor 110 configured to compress a refrigerant;
and optionally:
an oil separator 114 configured to separate oil from the refrigerant; an accumulator 112 configured to separate a gaseous refrigerant and a liquid refrigerant; a supercooler 120 configured to supercool the refrigerant; and an outdoor heat exchanger 130 configured to perform heat exchange between outdoor air and the refrigerant.

The compressor 110 may compress a low-pressure gaseous refrigerant into a high-pressure gaseous refrigerant. The compressor 110 may correspond to an inverter compressor capable of varying a refrigerant compression capacity.

An inlet of the compressor 110 may be connected to a second intermediate pipe 180, and the accumulator 112 may be disposed in the second intermediate pipe 180. An outlet of the compressor 110 may be connected to a first intermediate pipe 170, and the oil separator 114 may be disposed in the first intermediate pipe 170.

A pressure sensor 190 for measuring system pressure of the air conditioner 1 may be disposed at each of the inlet and the outlet of the compressor 110.

The accumulator 112 may separate the refrigerant, flowing into the compressor 110, into a liquid refrigerant and a gaseous refrigerant, and may supply only the gaseous refrigerant to the compressor 110.

The oil separator 114 may be disposed at the outlet of the compressor 110. The oil separator 114 may separate oil from the refrigerant discharged from the compressor 110 and may return the separated oil to the compressor 110 from the oil separator 114 through an oil collection pipe connected to the compressor 110.

The first intermediate pipe 170, connected to the outlet of the compressor 110, branches off and is connected to a first valve 171 and a second valve 172.

The first valve 171 and the second valve 172 are connected to each other via the first intermediate pipe 170, and switch a refrigerant passage according to a cooling operation and a heating operation of the air conditioner.

During the heating operation of the air conditioner, the first valve 171 may switch the refrigerant passage to connect an outdoor pipe 149 and the second intermediate pipe 180. During the cooling operation of the air conditioner, the first valve 171 may switch the refrigerant passage to connect the outdoor pipe 149 and the first intermediate pipe 170.

During the cooling operation of the air conditioner, the second valve 172 may switch the refrigerant passage to connect the second intermediate pipe 180 and a gaseous line 150. During the heating operation of the air conditioner, the second valve 172 may switch the refrigerant passage to connect the first intermediate pipe 170 and the gaseous line 150.

The supercooler 120 may be disposed in a liquid line 140. During the cooling operation of the air conditioner, the supercooler 120 may supercool the refrigerant heat exchanged by the heat exchanger 130.

A supercooling pipe 121 branches off from the liquid line 140 at an outlet side of the supercooler 120 and is connected to the inlet of the accumulator 112 or the inlet of the compressor 110. In the supercooling pipe 121, there are disposed a supercooling expansion valve 122 for adjusting and expanding an opening of the refrigerant passage of the refrigerant discharged from the supercooler 120, and a suction valve 123 for adjusting an amount of the refrigerant flowing into the accumulator 112 or the compressor 110.

The outdoor heat exchanger 130 includes a plurality of refrigerant tubes, through which the refrigerant flows, and a plurality of heat transfer fins, thereby allowing heat exchange between the refrigerant and outdoor air. In this case, in order to further facilitate the heat exchange, an outdoor fan 132 may be disposed near the outdoor heat exchanger 130 to supply outdoor air to the outdoor heat exchanger 130.

During the heating operation of the air conditioner, the outdoor heat exchanger 130 may be used as an evaporator to perform heat exchange between the refrigerant and the outdoor air, and during the cooling operation of the air conditioner, the outdoor heat exchanger 130 may be used as a condenser to perform heat exchange between the refrigerant and the outdoor air. There may be a single outdoor heat exchanger 130 or a plurality of outdoor heat exchangers 130. In this embodiment of the present disclosure, the outdoor heat exchanger 130 may include a first outdoor heat exchanger 130a and a second outdoor heat exchanger 130b which are connected in parallel with each other.

There may be a single indoor unit 20 or a plurality of indoor units 20. In this embodiment of the present disclosure, a plurality of indoor units 20 may be included.

The respective indoor units 20 include an indoor heat exchanger 210. The indoor heat exchanger 210 includes a plurality of refrigerant tubes, through which the refrigerant flows, and a plurality of heat transfer fins, thereby allowing heat exchange between the refrigerant and outdoor air. In this case, in order to further facilitate the heat exchange, an indoor fan (not shown) may be disposed near the indoor heat exchanger 210 to supply outdoor air to the indoor heat exchanger 210.

The indoor heat exchanger 210 may be used as an evaporator during the cooling operation of the air conditioner or may be used as a condenser during the heating operation of the air conditioner to perform heat exchange between the refrigerant and the outdoor air.

In addition, a leak sensor 214 for sensing leakage of a refrigerant into an indoor space is provided for the respective indoor units 20.

The air conditioner 1 according to an embodiment of the present invention includes the liquid line 140, through which the liquid refrigerant flows, and the gaseous line 150 through which the gaseous refrigerant flows.

The liquid line 140 connects the outdoor unit 10 and the indoor unit 20. An indoor expansion valve 212 and outdoor expansion valves 143 and 144 are disposed in the liquid line 140. The indoor expansion valve 212 expands the refrigerant, supplied to the indoor heat exchanger 210, by adjusting an opening degree during the cooling operation of the air conditioner. The outdoor expansion valves 143 and 144 expand the refrigerant, supplied to the outdoor heat exchanger 130, by adjusting an opening degree during the heating operation of the air conditioner.

One end of the liquid line 140 may be branched to a first distribution pipe 141 and a second distribution pipe 142. The first distribution pipe 141 may be connected to the first outdoor heat exchanger 130a, and the second distribution pipe 142 may be connected to the second outdoor heat exchanger 130b. The other end of the liquid line 140 may be branched to a plurality of liquid refrigerant distribution pipes. The plurality of liquid refrigerant distribution pipes may be respectively connected to each of the plurality of indoor heat exchangers 210.

The outdoor expansion valves 143 and 144 may include the first outdoor expansion valve 143 disposed in the first distribution pipe 141 and the second outdoor expansion valve 144 disposed in the second distribution pipe 142.

The gaseous line 150 connects the outdoor unit 10 and the indoor unit 20. As the second valve 172 is switched, one end of the gaseous line 150 may be connected to the first intermediate pipe 170 or the second intermediate pipe 180, and the other end thereof may be connected to the indoor heat exchanger 210. The other end of the gaseous line 150 may be branched to a plurality of gaseous refrigerant distribution pipes. The plurality of gaseous refrigerant distribution pipes may be respectively connected to each of the plurality of indoor heat exchangers 210.

The air conditioner 1 according to an embodiment of the present invention may include:
a first bypass pipe 145 branching off from the first distribution pipe 141 and connected to the second outdoor heat exchanger 130b; and a second bypass pipe 147 branching off from the first bypass pipe 145 and connected to the outdoor pipe 149.

A control valve 146 may be disposed in the first bypass pipe 145. The control valve 146 is opened during the cooling operation of the air conditioner, to allow the refrigerant, discharged from the first outdoor heat exchanger 130a, to be supplied to the second bypass pipe 147 and the second outdoor heat exchanger 130b. The control valve 146 is closed during the heating operation of the air conditioner, to prevent the refrigerant from flowing to the first bypass pipe 145.

A check valve 148 may be disposed in the second bypass pipe 147. The check valve 148 may prevent the refrigerant, discharged from the compressor during the cooling operation of the air conditioner, from flowing to the second bypass pipe 147 through the outdoor pipe 149.

The air conditioner 1 according to an embodiment of the present invention may include:
a total valve 30 disposed between the outdoor unit 10 and the indoor unit 20, and the shut-off valve 40 disposed adjacent to the indoor unit 20.

At least one or more of the total valve 30 and the shut-off valve 40 may be disposed in the air conditioner 1 based on whether the compressor 110 is operated again, which will be described below.

The total valve 30 may control a refrigerant flow between the outdoor unit 10 and the indoor unit 20. The total valve 30 may be disposed at a front end where the liquid line 140 and the gaseous line 150 are branched to each of the plurality of indoor units 20. The total valve 30 may include: a first total valve 31 disposed in the gaseous line 150 and opening and closing the gaseous line 150; and a second total valve 32 disposed in the liquid line 140 and opening and closing the liquid line 140.

The shut-off valve 40 may control a refrigerant flow between the outdoor unit 10 and the indoor unit 20. The shut-off valve 40 may be disposed adjacent to the indoor unit 20. The shut-off valve 40 may be disposed at each of the inlet and the outlet of the indoor unit 20. The shut-off valve 40 includes:
a first shut-off valve 41 disposed in the gaseous line 150 and opening and closing the gaseous line 150; and a second shut-off valve 42 disposed in the liquid line 140 and opening and closing the liquid line 140.

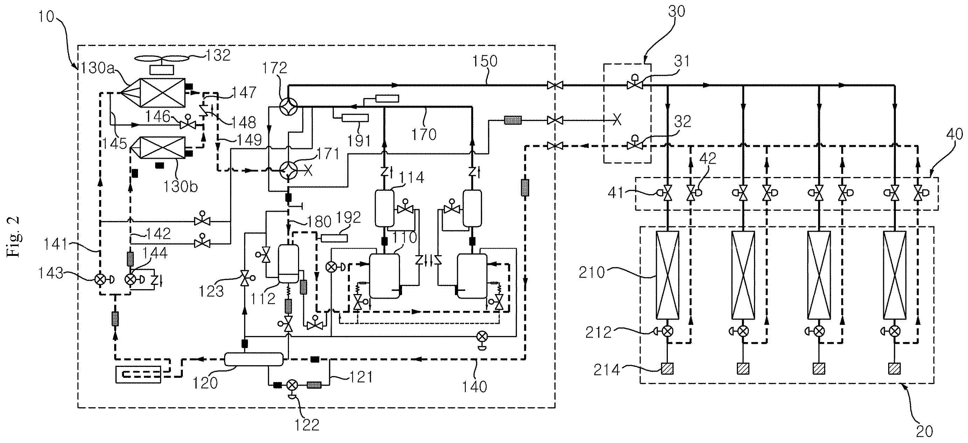

FIG. 2 is an exemplary diagram illustrating a refrigerant flow during a heating operation of an air conditioner according to an embodiment of the present invention.

Hereinafter, an operation of an air conditioner during a heating operation and a refrigerant flow therein will be described with reference to FIG. 2.

A high-pressure gaseous refrigerant, discharged from the compressor 110, may flow into the second valve 172 through the first intermediate pipe 170. The second valve 172 may be switched to connect the first intermediate pipe 170 and the gaseous line 150. Accordingly, the refrigerant flowing into the second valve 172 may flow through the gaseous line 150.

The refrigerant flowing through the gaseous line 150 may pass through the first total valve 31, and the first shut-off valve 41 disposed at the inlet of each of the plurality of indoor units 20, to be supplied to each of the plurality of indoor units 20.

The refrigerant, supplied to each of the plurality of indoor units 20, may pass through the indoor expansion valve 212 to flow into the indoor heat exchanger 210, to be condensed in the indoor heat exchanger 210. Accordingly, the plurality of indoor units 20 may perform a heating operation.

The refrigerant, discharged from the plurality of indoor units 20, may pass through the second shut-off valve 42, disposed at the outlet of each of the plurality of indoor units 20, and the second total valve 32, to flow through the liquid line 140.

The refrigerant flowing through the liquid line 140 may be distributed to the first distribution pipe 141 and the second distribution pipe 142.

The refrigerant distributed to the first distribution pipe 141 may pass through the first outdoor expansion valve 143 to be supplied to the first outdoor heat exchanger 130a. The refrigerant supplied to the first outdoor heat exchanger 130a may be evaporated in the first outdoor heat exchanger 130a to be discharged therefrom.

The refrigerant distributed to the second distribution pipe 142 may pass through the second outdoor expansion valve 144 to be supplied to the second outdoor heat exchanger 130b. The refrigerant supplied to the second outdoor heat exchanger 130b may be evaporated in the second outdoor heat exchanger 130b to be discharged therefrom.

The refrigerant discharged from the first outdoor heat exchanger 130a and the refrigerant discharged from the second outdoor heat exchanger 130b may be mixed in the outdoor pipe 149.

The refrigerants mixed in the outdoor pipe 149 may flow into the first valve 171 through the outdoor pipe 149. The first valve 171 is switched to connect the second intermediate pipe 180 and the outdoor pipe 149. Accordingly, the refrigerants mixed in the outdoor pipe 149 may flow through the second intermediate pipe 180.

The refrigerant flowing through the second intermediate pipe 180 may pass through the accumulator 112 to be drawn into the compressor 110.

Accordingly, the air conditioner 1 according to an embodiment of the present disclosure may heat the indoor space by repeating the above cycle.

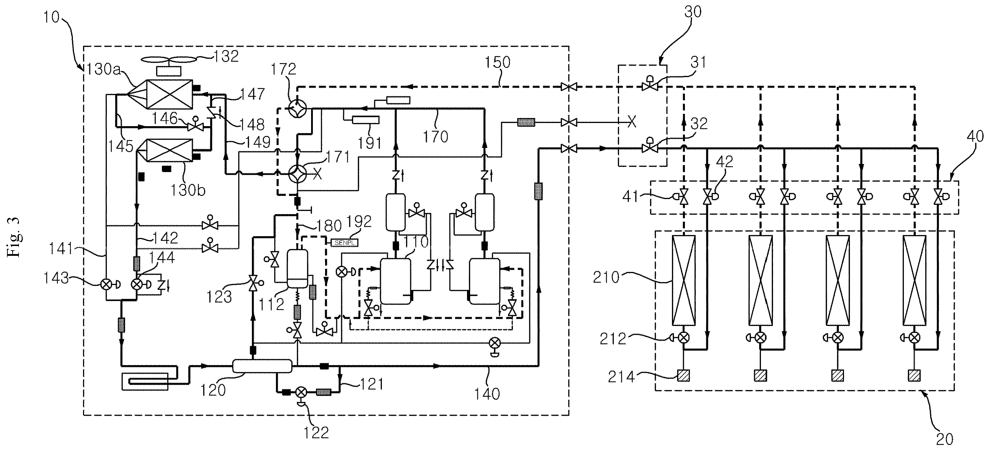

FIG. 3 is an exemplary diagram illustrating a refrigerant flow during a cooling operation of an air conditioner according to an embodiment of the present invention.

Hereinafter, an operation of an air conditioner during a cooling operation and a refrigerant flow therein will be described with reference to FIG. 3.

A high-pressure gaseous refrigerant, discharged from the compressor 110, may flow into the first valve 171 through the first intermediate pipe 170. The first valve 171 is switched to connect the first intermediate pipe 170 and the outdoor pipe 149. Accordingly, the refrigerant flowing into the first valve 171 may be introduced into the outdoor pipe 149.

The check valve 148 may block the refrigerant, introduced into the outdoor pipe 149, from flowing to the second bypass pipe 147. Accordingly, the refrigerant introduced into the outdoor pipe 149 may be supplied to the first outdoor heat exchanger 130a.

The refrigerant supplied to the first outdoor heat exchanger 130a may be condensed in the first outdoor heat exchanger 130a and discharged to the first distribution pipe 141. The refrigerant discharged to the first distribution pipe 141 may be introduced into the first bypass pipe 145 as the first outdoor expansion valve 143 is closed. A portion of the refrigerant introduced into the first bypass pipe 145 may flow into the second bypass pipe 147 to be supplied again to the first outdoor heat exchanger 130a, and a portion of the remaining refrigerant introduced into the first bypass pipe 145 may be supplied to the second outdoor heat exchanger 130b.

The refrigerant supplied to the second outdoor heat exchanger 130b may be condensed in the second outdoor heat exchanger 130b and discharged to the second distribution pipe 143.

The refrigerant discharged to the second distribution pipe 14 may flow through the liquid line 140. The refrigerant flowing through the liquid line 140 may be supplied to the supercooler 120 to be supercooled and discharged.

A portion of the refrigerant discharged from the supercooler 120 may flow into the supercooling pipe 121. The refrigerant flowing into the supercooling pipe 121 may be expanded by passing through the supercooling expansion valve 122, to be phase-changed into a low-temperature gaseous refrigerant. The refrigerant, having passed through the supercooling expansion valve 122, may be heat exchanged with the refrigerant flowing into the supercooler 120, and then may pass through the suction valve 123 to flow into the second intermediate pipe 180.

A portion of the remaining refrigerant, having passed through the supercooler 120, may pass through the second shut-off valve 42 disposed at the inlet of the indoor unit 20, to be supplied to each of the plurality of indoor units 20.

The refrigerant supplied to each of the plurality of indoor units 20 may be expanded by passing through the indoor expansion valve 212, and may be evaporated in the plurality of indoor heat exchangers 210. Accordingly, the plurality of indoor units 20 may perform a cooling operation.

The refrigerant discharged from the plurality of indoor units 20 may pass through the first shut-off valve 41, disposed at the outlet of the plurality of indoor units 20, and the first total valve 31, to flow through the gaseous line 150.

The refrigerant flowing through the gaseous line 150 may be introduced into the second valve 172. The second valve 172 may be switched to connect the gaseous line 150 and the second intermediate pipe 180. Accordingly, the refrigerant introduced into the second valve 172 may flow into the second intermediate pipe 180.

The refrigerant, flowing into the second intermediate pipe 180, may be mixed with the refrigerant flowing from the supercooling pipe 121, and may pass through the accumulator 112 to be drawn into the compressor 110.

Accordingly, the air conditioner 1 according to an embodiment of the present disclosure may cool the indoor space by repeating the above cycle.

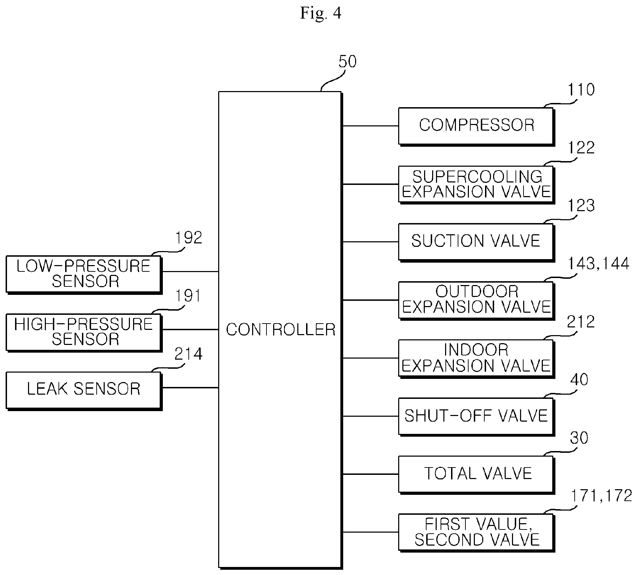

FIG. 4 is a block diagram illustrating a controller and related components according to an embodiment of the present invention.

Referring to FIG. 4, the air conditioner 1 according to an embodiment of the present invention includes: a pressure sensor 190 configured to measure system pressure; a leak sensor 214 configured to sense refrigerant leakage into the indoor unit 20; and a controller 50 configured to control the operation of the air conditioner 1.

The pressure sensor 190 may include a high-pressure sensor 191 for measuring a high system pressure and a low-pressure sensor 192 for measuring a low system pressure. Here, the high system pressure may refer to a discharge pressure of the compressor 110, and the low system pressure may refer to a suction pressure of the compressor 110.

The high-pressure sensor 191 may be disposed at the outlet of the compressor 110. The low-pressure sensor 192 may be disposed at the inlet of the compressor 110. Accordingly, by comparing pressure measured by the pressure sensor 190 with a set system pressure, it is possible to determine whether the system pressure is stable.

The leak sensor 214 may be disposed on one side of the indoor unit 20. When there are a plurality of indoor units 20, the leak sensor 214 may be provided for each of the plurality of indoor units 20. The leak sensor 214 may be a temperature sensor which determines leakage of a refrigerant by measuring temperature of the refrigerant tubes of the indoor units 20, or may be a sensor which determines leakage of a refrigerant by sensing the presence of refrigerant in the air and measuring a concentration of the refrigerant leakage.

The controller 50 may control the first valve 171 and the second valve 172 so that the first valve 171 and the second valve 172 may be switched according to the cooling operation or the heating operation of the air conditioner 1.

The controller 50 may operate or stop the compressor 110, or may control the compressor 110 to reduce a frequency of the compressor 110.

By controlling the opening or closing of the suction valve 123, the controller 50 may control the suction valve 123 to adjust a flow of refrigerant flowing into the inlet of the compressor 110.

By controlling the opening of the supercooling expansion valve 122, the outdoor expansion valves 143 and 144, and the indoor expansion valve 212, the controller 50 may control the supercooling expansion valve 122, the outdoor expansion valves 143 and 144, and the indoor expansion valve 212 to expand the refrigerant.

By opening and closing the supercooling expansion valve 122, the outdoor expansion valves 143 and 144, and the indoor expansion valve 212, the controller 50 may control the supercooling expansion valve 122, the outdoor expansion valves 143 and 144, and the indoor expansion valve 212 to control the refrigerant flow.

By opening and closing the total valve 30 and the shut-off valve 40, the controller 50 may control the total valve 30 and the shut-off valve 40 to control the refrigerant flow between the outdoor unit 10 and the indoor unit 20.

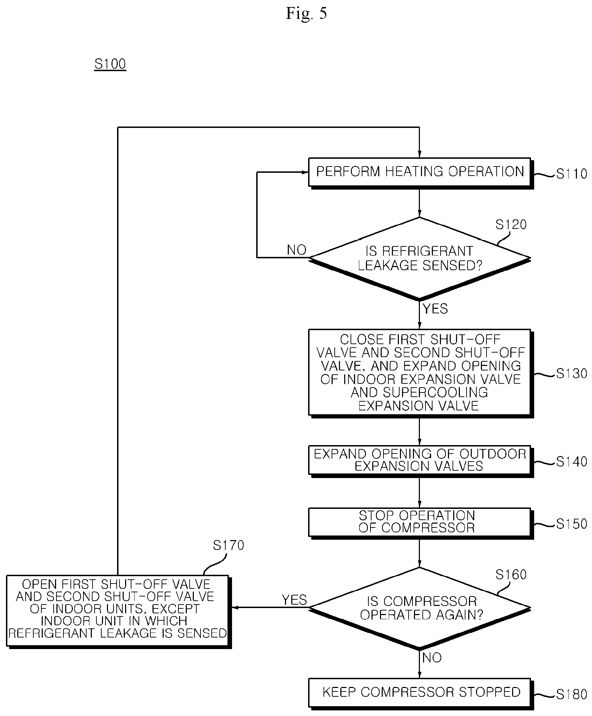

FIG. 5 is a flowchart illustrating a method of controlling an air conditioner when refrigerant leakage occurs in an indoor unit during a heating operation of the air conditioner according to an embodiment of the present invention.

Hereinafter, a method of controlling the air conditioner (S100) for minimizing refrigerant leakage into an indoor space when the refrigerant leakage occurs in the indoor unit during the heating operation of the air conditioner will be described with reference to FIG. 5.

By controlling the compressor 110 to operate, the controller 50 may control the air conditioner 1 to perform the heating operation (S110), thereby heating the indoor space.

The controller 50 may sense refrigerant leakage in at least one of a plurality of indoor units 20 by using the leak sensor 214 during the heating operation of the air conditioner 1 (S120). When no refrigerant leakage is sensed in the indoor units 20, the air conditioner 1 may continuously perform the heating operation.

By contrast, upon sensing the refrigerant leakage in the indoor unit 20, the controller 50 may store a position of the indoor unit 20 in which the refrigerant leakage is sensed.

Upon sensing the refrigerant leakage in the indoor unit 20, the controller 50 closes the first shut-off valve 41 disposed at the inlet of each of the plurality of indoor units 20, and the second shut-off valve 42 disposed at the outlet of each of the plurality of indoor units 20 (S130).

In this case, the inlet of each of the plurality of indoor units 20 may be connected to the gaseous line 150, and the outlet of each of the plurality of indoor units 20 may be connected to the liquid line 140.

In this case, it may take a predetermined period of time from when the first shut-off valve 41 and the second shut-off valve 42 begin to be closed to when the first shut-off valve 41 and the second shut-off valve 42 are fully closed. The predetermined period of time may be about one minute or so and may be referred to as a set time.

Upon sensing the refrigerant leakage in the indoor unit 20, the controller 50 expands the opening of the indoor expansion valve 212, and the indoor expansion valve 212 may be fully opened (S130). Accordingly, the indoor unit 20 may communicate with the liquid line 140.

Upon sensing the refrigerant leakage in the indoor unit 20, the controller 50 expands the opening of the supercooling expansion valve 122, and the supercooling expansion valve 122 may be fully opened (S130). Accordingly, the liquid line 140 may be connected to the inlet of the compressor 110 via the supercooling pipe 121.

Meanwhile, in the case where the suction valve 123 is disposed in the supercooling pipe 121, the controller 50 may fully open the suction valve 123 and the supercooling expansion valve 122.

Upon sensing the refrigerant leakage in the indoor unit 20, the controller 50 expands the opening of the outdoor expansion valves 143 and 144, and the outdoor expansion valves 143 and 144 may be fully opened (S140).

Upon sensing the refrigerant leakage in the indoor unit 20, the controller 50 stops the operation of the compressor 110. Accordingly, while the shut-off valve 40 is closed, it is possible to prevent the refrigerant from flowing into the indoor unit 20 (S150).

When the set time elapses after the first shut-off valve 41 and the second shut-off valve 42 begin to be closed until the first shut-off valve 41 and the second shut-off valve 42 are fully closed, the controller 50 may determine whether to operate the compressor 110 again (S160).

Upon determining to operate the compressor 110 again, the controller 50 may open the first shut-off valve 41 and the second shut-off valve 42 of the indoor units 20, except the indoor unit 20 in which the refrigerant leakage is sensed (S170).

Accordingly, the air conditioner 1 may continuously perform the heating operation of the indoor units 20, except the indoor unit 20 in which the refrigerant leakage is sensed.

Upon determining not to operate the compressor 110 again, the controller 50 may keep the compressor 110 stopped (S180).

In this manner, when the refrigerant leakage occurs in at least one of the plurality of indoor units 20 during the heating operation of the air conditioner 1, the controller 50 may control the shut-off valve 40 to block a refrigerant flow between the outdoor unit 10 and the indoor unit 20.

In addition, when the refrigerant leakage occurs in the indoor unit 20 during the heating operation of the air conditioner 1, the controller 50 may reduce the pressure of the liquid line 140 to a level similar to an indoor atmospheric pressure by connecting the liquid line 140 and the inlet of the compressor 110 which corresponds to a low system pressure. Accordingly, a pressure difference between the indoor atmospheric pressure and the pressure of the liquid line 140 is reduced, such that it is possible to minimize an amount of refrigerant leaking into the indoor space during a period of time until the shut-off valve 40 is actually closed.

Unlike the above example, in the case where a single indoor unit 20 is provided, the determination whether to operate the compressor 110 again (S160) may not be included.

In addition, when the single indoor unit 20 is provided, only the total valve 30 may be disposed in the air conditioner 1 instead of the shut-off valve 40, and when the refrigerant leakage occurs in the indoor unit 20, the total valve 30 may operate as the shut-off valve 40 as described above with reference to FIG. 5.

Further, even when there are a plurality of indoor units 20, if it is not required to operate the compressor 110 again, the determination whether to operate the compressor 110 again (S160) may not be included. In this case, only the total valve 30 may be disposed in the air conditioner 1 instead of the shut-off valve 40, and when the refrigerant leakage occurs in the indoor unit 20, the total valve 30 may operate as the shut-off valve 40 as described above with reference to FIG. 5.

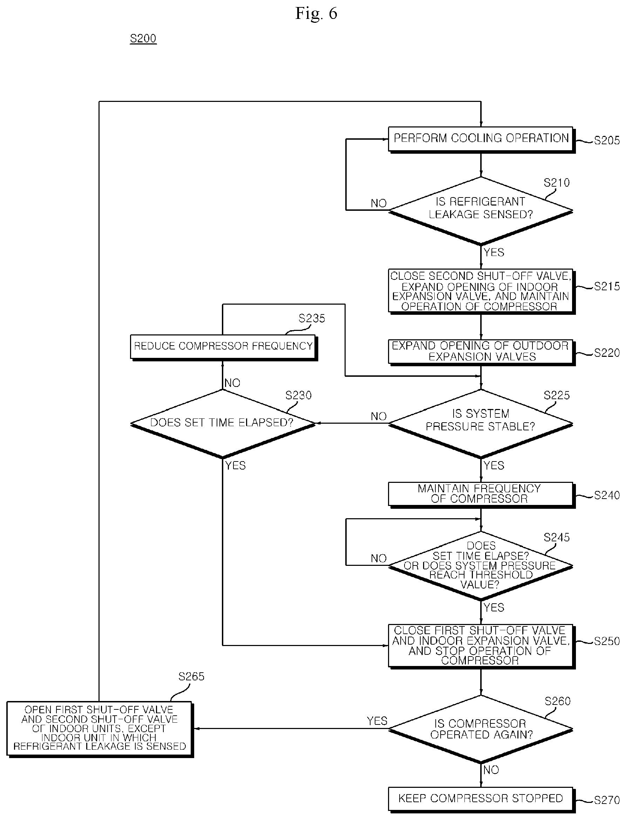

FIG. 6 is a flowchart illustrating a method of controlling an air conditioner when refrigerant leakage occurs in an indoor unit during a cooling operation of the air conditioner according to an embodiment of the present invention.

Hereinafter, the method of controlling the air conditioner (S200) for minimizing refrigerant leakage into the indoor space when the refrigerant leakage is sensed in the indoor unit during the cooling operation of the air conditioner will be described with reference to FIG. 6.

By controlling the compressor 110 to operate, the controller 50 may control the air conditioner 1 to perform the cooling operation (S205), thereby cooling the indoor space.

The controller 50 may sense refrigerant leakage in at least one of a plurality of indoor units 20 by using the leak sensor 214 during the cooling operation of the air conditioner 1 (S210). When no refrigerant leakage is sensed in the indoor units 20, the air conditioner 1 may continuously perform the cooling operation.

By contrast, upon sensing the refrigerant leakage in the indoor unit 20, the controller 50 may store a position of the indoor unit 20 in which the refrigerant leakage is sensed.

Upon sensing the refrigerant leakage in the indoor unit 20, the controller 50 may close the second shut-off valve 42 disposed at the inlet of each of the plurality of indoor units 20 (S215).

In this case, the inlet of each of the plurality of indoor units 20 may be connected to the liquid line 140, and the outlet of each of the plurality of indoor units 20 may be connected to the gaseous line 150.

In this case, it may take a predetermined period of time from when the second shut-off valve 42 begins to be closed to when the second shut-off valve 42 is fully closed. The predetermined period of time may be about one minute or so and may be referred to as a set time.

Upon sensing the refrigerant leakage in the indoor unit 20, the controller 50 may expand the opening of the indoor expansion valve 212, and the indoor expansion valve 212 may be fully opened (S215).

By maintaining the operation of the compressor 110, the controller 50 may return the refrigerant to the outdoor unit 10 (S215).

By closing the outdoor expansion valves 143 and 144, the controller 50 may prevent a high-pressure refrigerant from flowing into the indoor unit 20 (S220).

By comparing a system pressure, measured by the pressure sensor 190, with a set pressure, the controller 50 may determine whether the system pressure is stable (S225).

Here, the system pressure may refer to a high system pressure and a low system pressure. The high system pressure may refer to a discharge pressure of the compressor, and the low system pressure may refer to a suction pressure of the compressor.

The high system pressure may be measured by the high-pressure sensor 191 disposed at the outlet of the compressor, and the low system pressure may be measured by the low-pressure sensor 192 disposed at the inlet of the compressor.

If the high pressure measured by the high-pressure sensor 191 is less than or equal to a first set pressure, the controller 50 may determine that the system pressure is stable. The first set pressure may correspond to a pressure level that keeps the discharge pipe of the compressor 110 safe from the risk of rupture. The first set pressure may correspond to an experimental value obtained in experiments.

If the pressure measured by the low-pressure sensor 192 is greater than or equal to a second set pressure, the controller 50 may determine that the system pressure is stable. The second set pressure may correspond to a pressure level that keeps a driving part for operating the compressor 110 safe from the risk of damage. The second set pressure may correspond to an experimental value obtained in experiments.

The determination as to whether the system pressure is stable may be made in such a manner that if the high system pressure measured by the high-pressure sensor 191 exceeds a first set vale, or if the low system pressure measured by the low-pressure sensor 192 is less than a second set value, the controller 50 may determine that the system pressure is unstable; and if the high system pressure measured by the high-pressure sensor 191 is less than or equal to the first set value, and the low system pressure measured by the low-pressure sensor 192 is less than or equal to the second set value, the controller 50 may determine that the system pressure is stable.

If the system pressure is unstable, the controller 50 may determine whether a set time elapses after the second shut-off valve 42 begins to be closed (S230).

If the system pressure is unstable, and the set time does not elapse after the second shut-off valve 42 begins to be closed, the controller 50 may reduce a frequency of the compressor 110 (S235), to control the system pressure.

If the system pressure is unstable, and the set time elapses after the second shut-off valve 42 begins to be closed, the controller 50 may close the first shut-off valve 41 and the indoor expansion valve 212 and may stop the operation of the compressor 110 (S250).

If the system pressure is stable, the controller 50 may operate the compressor 110 while maintaining the frequency of the compressor 110 (S240).

When continuously operating the compressor 110 while maintaining the frequency of the compressor 110, the controller 50 may determine whether the set time elapses after the second shut-off valve 42 begins to be closed, or whether the system pressure reaches a threshold value (S245).

The determination as to whether the system pressure reaches a threshold value may be made based on whether the high system pressure, measured by the high-pressure sensor 191, reaches the first set pressure or whether the low system pressure, measured by the low-pressure sensor 192, reaches the second set pressure.

If the set time elapses after the second shut-off valve 42 begins to be closed, or if the system pressure reaches the threshold value, the controller 50 may close the first shut-off valve 41 and the indoor expansion valve 212, and may stop the operation of the compressor 110 (S250).

When the set time elapses after the first shut-off valve 41 begins to be closed until the first shut-off valve 41 is fully closed, the controller 50 may determine whether to operate the compressor 110 again (S260).

Upon determining to operate the compressor 110 again, the controller 50 may open the first shut-off valve 41 and the second shut-off valve 42 of the indoor units 20, except the indoor unit 20 in which the refrigerant leakage is sensed (S265).

Accordingly, the air conditioner 1 may continuously perform the cooling operation of the indoor units 20, except the indoor unit 20 in which the refrigerant leakage is sensed.

Upon determining not to operate the compressor 110 again, the controller 50 may keep the compressor 110 stopped (S270).

In this manner, when the refrigerant leakage occurs in at least one of the plurality of indoor units 20 during the cooling operation of the air conditioner 1, the controller 50 may control the compressor 110 to return the refrigerant to the outdoor unit 10. Accordingly, it is possible to minimize an amount of refrigerant leaking into the indoor space during a period of time until the shut-off valve 40 is actually closed.

Unlike the above example, in the case where a single indoor unit 20 is provided, the determination whether to operate the compressor 110 again (S260) may not be included.

In addition, when the single indoor unit 20 is provided, only the total valve 30 may be disposed in the air conditioner 1 instead of the shut-off valve 40, and when the refrigerant leakage occurs in the indoor unit 20, the total valve 30 may operate as the shut-off valve 40 as described above with reference to FIG. 6.

Further, even when there are a plurality of indoor units 20, if it is not required to operate the compressor 110 again, the determination whether to operate the compressor 110 again (S260) may not be included. In this case, only the total valve 30 may be disposed in the air conditioner 1 instead of the shut-off valve 40, and when the refrigerant leakage occurs in the indoor unit 20, the total valve 30 may operate as the shut-off valve 40, as described above with reference to FIG. 6.

The air conditioner according to the present disclosure has one or more of the following effects.

First, upon sensing the refrigerant leakage in the indoor unit during the heating operation of the air conditioner, the air conditioner may connect the liquid line to the inlet of the compressor while the shut-off valve of the indoor unit is closed, such that a pressure difference between the pressure of the liquid line and the indoor atmospheric pressure may be reduced, thereby minimizing an amount of refrigerant leaking into the indoor space.

Second, upon sensing the refrigerant leakage in the indoor unit during the cooling operation of the air conditioner, the air conditioner operates the compressor while the shut-off valve of the indoor unit is closed, to return the refrigerant in the indoor unit to the outdoor unit, thereby minimizing an amount of refrigerant leaking into the indoor space.

Third, by blocking the refrigerant from leaking into the indoor space, the air conditioner may operate only the indoor units in which no refrigerant leakage occurs.

## Claims

1. An air conditioner comprising:
an outdoor unit (10) having a compressor (110) configured to compress a refrigerant;
an indoor unit (20) having an indoor heat exchanger (210), in which the refrigerant is heat exchanged, an indoor expansion valve (212) for expanding the refrigerant by adjusting an opening, and a leak sensor (214) for sensing leakage of the refrigerant;
a gas line (150) which connects the outdoor unit (10) and the indoor unit (20) and through which a gaseous refrigerant flows;
a liquid line (140) which connects the outdoor unit (10) and the indoor unit (20) and through which a liquid refrigerant flows;
a first shut-off valve (41) disposed adj acent to the indoor unit (20) and opening and closing the gas line (150);
a second shut-off valve (42) disposed adjacent to the indoor unit (20) and opening and closing the liquid line (140);
a controller (50) configured to control operation of the compressor (110) and to control opening and closing of the first shut-off valve (41), the second shut-off valve (42), and the indoor expansion valve (212),
a supercooling pipe (121) branched off from the liquid line (140) and connected to an inlet of the compressor (110); and
a supercooling expansion valve (122) expanding a refrigerant, flowing through the supercooling pipe (121), by adjusting an opening; and
wherein the outdoor unit (10) comprises an outdoor expansion valve (143, 144) disposed in the liquid line (140) and expanding the refrigerant by adjusting an opening,
**characterized in that**:
when the leak sensor (214) senses the leakage of the refrigerant in a heating operation, the controller (50) is configured in the heating operation to close the first shut-off valve (41) and the second shut-off valve (42), expand the opening of the indoor expansion valve (212), expand the opening of the supercooling expansion valve (122), expand the opening of the outdoor expansion valve (143 and 144), and stop the operation of the compressor (110).

2. The air conditioner of claim 1, wherein, when the leak sensor (214) senses the leakage of the refrigerant in a cooling operation, the controller (50) is configured to close the second shut-off valve (42), to expand the opening of the indoor expansion valve (212), and to maintain the operation of the compressor (110) to return the refrigerant to the outdoor unit (10).

3. The air conditioner of claim 2, wherein, when the leak sensor (214) senses the leakage of the refrigerant in the cooling operation, the controller (50) is configured to close the outdoor expansion valve (143, 144).

4. The air conditioner of claim 2 or 3, wherein, when a system pressure, measured by a pressure sensor, is unstable, the controller (50) is configured to reduce a frequency of the compressor (110).

5. The air conditioner of any one of claims 2 to 4, wherein, when a set time elapses after the second shut-off valve (42) begins to be closed, or when the system pressure reaches a threshold value, the controller (50) is configured to close the first shut-off valve (41) and the indoor expansion valve (212), and to stop the operation of the compressor (110).

6. The air conditioner of claim 1 or 5, wherein a plurality of indoor units (20) are provided,
wherein:
the first shut-off valve (41) and the second shut-off valve (42) are disposed in each of the plurality of indoor units (20); and
when the leak sensor (214) senses the leakage of the refrigerant in the heating operation, the controller (50) is configured to store a position of an indoor unit (20) in which the leakage of the refrigerant occurs, among the plurality of indoor units (20).

7. The air conditioner of claim 6, wherein the controller (50) is configured to open the first shut-off valve (41) and the second shut-off valve (42) of the indoor units (20), except for the indoor unit (20) in which the leakage of the refrigerant occurs, and to operate the compressor (110) again.

8. A method of controlling an air conditioner, the method comprising:
operating (S110) a compressor (110) to perform a heating operation;
performing leakage sensing (S120) of a refrigerant in an indoor unit (20) by using a leak sensor (214);
**characterized in that** the method comprises:
when the leakage of the refrigerant is sensed in the heating operation (S130), in the heating operation closing a first shut-off valve (41) and a second shut-off valve (42) that control a refrigerant flow between the indoor unit (20) and an outdoor unit (10), expanding an opening of an indoor expansion valve (212) and a supercooling expansion valve (122) disposed in a supercooling pipe (121) that connects a liquid line (140) and an inlet of the compressor (110), expanding (S140) an outdoor expansion valve (143, 144) disposed in the liquid line (140) and expanding the refrigerant by adjusting an opening, and stopping (S150) the operation of the compressor (110) to prevent the refrigerant from flowing into the indoor unit (20).

9. The method of claim 8, wherein a plurality of indoor units (20) are provided, wherein each of the plurality of indoor units (20) comprises the first shut-off valve (41) formed at an inlet, the second shut-off valve (42) formed at an outlet, the indoor expansion valve (212), and the leak sensor (214),
wherein performing sensing of the leakage of the refrigerant in the indoor units (20) by using the leak sensor (214) further comprises:
storing a position of an indoor unit (20), in which the leakage of the refrigerant occurs, among the plurality of indoor units (20); and
when the leakage of the refrigerant is sensed, closing the first shut-off valve (41) and the second shut-off valve (42) of the plurality of indoor units (20), and expanding an opening of the indoor expansion valve (212).

10. The method of claim 9, further comprising opening (S170) the first shut-off valve (41) and the second shut-off valve (42) of the indoor units (20), except the indoor unit (20) in which the leakage of the refrigerant occurs, and operating the compressor (110) again.

## Patentansprüche

1. Klimaanlage, die aufweist:
eine Außeneinheit (10) mit einem Verdichter (110), der konfiguriert ist, ein Kältemittel zu verdichten;
eine Inneneinheit (20) mit einem Innenwärmetauscher (210), in dem das Kältemittel wärmegetauscht wird, einem Innenexpansionsventil (212) zum Expandieren des Kältemittels durch Einstellen einer Öffnung und einem Lecksensor (214) zum Erfassen einer Leckage des Kältemittels;
eine Gasleitung (150), die die Außeneinheit (10) und die Inneneinheit (20) verbindet und durch die ein gasförmiges Kältemittel strömt;
eine Flüssigkeitsleitung (140), die die Außeneinheit (10) und die Inneneinheit (20) verbindet und durch die ein flüssiges Kältemittel strömt;
ein erstes Absperrventil (41), das benachbart zur Inneneinheit (20) angeordnet ist und die Gasleitung (150) öffnet und schließt;
ein zweites Absperrventil (42), das benachbart zur Inneneinheit (20) angeordnet ist und die Flüssigkeitsleitung (140) öffnet und schließt;
eine Steuerung (50), die konfiguriert ist, den Betrieb des Verdichters (110) zu steuern und das Öffnen und Schließen des ersten Absperrventils (41), des zweiten Absperrventils (42) und des Innenexpansionsventils (212) zu steuern,
eine Unterkühlungsleitung (121), die von der Flüssigkeitsleitung (140) abzweigt und mit einem Einlass des Verdichters (110) verbunden ist; und
ein Unterkühlungsexpansionsventil (122), das ein durch die Unterkühlungsleitung (121) strömendes Kältemittel durch Einstellen einer Öffnung expandiert; und
wobei die Außeneinheit (10) ein Außenexpansionsventil (143, 144) aufweist, das in der Flüssigkeitsleitung (140) angeordnet ist und das Kältemittel durch Einstellen einer Öffnung expandiert,
**dadurch gekennzeichnet, dass**:
wenn der Lecksensor (214) die Leckage des Kältemittels in einem Heizbetrieb erfasst, die Steuerung (50) konfiguriert ist, im Heizbetrieb das erste Absperrventil (41) und das zweite Absperrventil (42) zu schließen, die Öffnung des Innenexpansionsventils (212) zu erweitern, die Öffnung des Unterkühlungsexpansionsventils (122) zu erweitern, die Öffnung des Außenexpansionsventils (143 und 144) zu erweitern und den Betrieb des Verdichters (110) zu stoppen.

2. Klimaanlage nach Anspruch 1, wobei, wenn der Lecksensor (214) die Leckage des Kältemittels in einem Kühlbetrieb erfasst, die Steuerung (50) konfiguriert ist, das zweite Absperrventil (42) zu schließen, die Öffnung des Innenexpansionsventils (212) zu erweitern und den Betrieb des Verdichters (110) aufrechtzuerhalten, um das Kältemittel zur Außeneinheit (10) zurückzuführen.

3. Klimaanlage nach Anspruch 2, wobei, wenn der Lecksensor (214) die Leckage des Kältemittels im Kühlbetrieb erfasst, die Steuerung (50) konfiguriert ist, das Außenexpansionsventil (143, 144) zu schließen.

4. Klimaanlage nach Anspruch 2 oder 3, wobei, wenn ein von einem Drucksensor gemessener Systemdruck instabil ist, die Steuerung (50) konfiguriert ist, eine Frequenz des Verdichters (110) zu reduzieren.

5. Klimaanlage nach einem der Ansprüche 2 bis 4, wobei, wenn eine eingestellte Zeit verstreicht, nachdem das zweite Absperrventil (42) zu schließen beginnt, oder wenn der Systemdruck einen Schwellenwert erreicht, die Steuerung (50) konfiguriert ist, das erste Absperrventil (41) und das Innenexpansionsventil (212) zu schließen und den Betrieb des Verdichters (110) zu stoppen.

6. Klimaanlage nach Anspruch 1 oder 5, wobei mehrere Inneneinheiten (20) vorgesehen sind,
wobei:
das erste Absperrventil (41) und das zweite Absperrventil (42) in jeder der mehreren Inneneinheiten (20) angeordnet sind; und
wenn der Lecksensor (214) die Leckage des Kältemittels im Heizbetrieb erfasst, die Steuerung (50) konfiguriert ist, unter den mehreren Inneneinheiten (20) eine Position einer Inneneinheit (20), in der die Leckage des Kältemittels auftritt, zu speichern.

7. Klimaanlage nach Anspruch 6, wobei die Steuerung (50) konfiguriert ist, das erste Absperrventil (41) und das zweite Absperrventil (42) der Inneneinheiten (20) zu öffnen, mit Ausnahme der Inneneinheit (20), in der die Leckage des Kältemittels auftritt, und den Verdichter (110) wieder zu betreiben.

8. Verfahren zum Steuern einer Klimaanlage, wobei das Verfahren aufweist:
Betreiben (S110) eines Verdichters (110), um einen Heizbetrieb durchzuführen;
Durchführen einer Leckageerfassung (S210) eines Kältemittels in einer Inneneinheit (20) unter Verwendung eines Lecksensors (214);
**dadurch gekennzeichnet, dass** das Verfahren aufweist:
wenn die Leckage des Kältemittels im Heizbetrieb (S130) erfasst wird, im Heizbetrieb Schließen eines ersten Absperrventils (41) und eines zweiten Absperrventils (42), die einen Kältemittelfluss zwischen der Inneneinheit (20) und einer Außeneinheit (10) steuern, Erweitern einer Öffnung eines Innenexpansionsventils (212) und eines Unterkühlungsexpansionsventils (122), das in einer Unterkühlungsleitung (121) angeordnet ist, die eine Flüssigkeitsleitung (140) und einen Einlass des Verdichters (110) verbindet, Erweitern (S140) eines Außenexpansionsventils (143, 144), das in der Flüssigkeitsleitung (140) angeordnet ist, und Expandieren des Kältemittels durch Einstellen einer Öffnung, und Stoppen (S150) des Betriebs des Verdichters (110), um zu verhindern, dass das Kältemittel in die Inneneinheit (20) strömt.

9. Verfahren nach Anspruch 8, wobei mehrere Inneneinheiten (20) vorgesehen ist, wobei jede der mehreren Inneneinheiten (20) das erste Absperrventil (41), das an einem Einlass ausgebildet ist, das zweite Absperrventil (42), das an einem Auslass ausgebildet ist, das Innenexpansionsventil (212) und den Lecksensor (214) aufweist,
wobei das Durchführen des Erfassens der Leckage des Kältemittels in den Inneneinheiten (20) unter Verwendung des Lecksensors (214) ferner aufweist:
Speichern einer Position einer Inneneinheit (20), in der die Leckage des Kältemittels auftritt, unter den mehreren Inneneinheiten (20); und
Schließen des ersten Absperrventils (41) und des zweiten Absperrventils (42) der mehreren Inneneinheiten (20), wenn die Leckage des Kältemittels erfasst wird, und Erweitern einer Öffnung des Innenexpansionsventils (212).

10. Verfahren nach Anspruch 9, das ferner das Öffnen (S170) des ersten Absperrventils (41) und des zweiten Absperrventils (42) der Inneneinheiten (20) mit Ausnahme der Inneneinheit (20), in dem die Kältemittelleckage auftritt, und das erneute Betreiben des Verdichters (110) aufweist.

## Revendications

1. Climatiseur, comprenant :
une unité extérieure (10) pourvue d'un compresseur (110) prévu pour comprimer un réfrigérant ;
une unité intérieure (20) comportant un échangeur de chaleur intérieur (210) où le réfrigérant est soumis à un échange de chaleur, un détendeur intérieur (212) pour détendre le réfrigérant par réglage d'une ouverture, et un capteur de fuite (214) pour détecter les fuites de réfrigérant ;
une conduite de gaz (150) reliant l'unité extérieure (10) et l'unité intérieure (20) et dans laquelle circule un réfrigérant gazeux ;
une conduite de liquide (140) reliant l'unité extérieure (10) et l'unité intérieure (20) et dans laquelle circule un réfrigérant liquide ;
une première vanne de fermeture (41) adjacente à l'unité intérieure (20) et permettant d'ouvrir et de fermer la conduite de gaz (150) ;
une deuxième vanne de fermeture (42) adjacente à l'unité intérieure (20) et permettant d'ouvrir et de fermer la conduite de liquide (140) ;
un contrôleur (50) prévu pour commander le fonctionnement du compresseur (110) et pour commander l'ouverture et la fermeture de la première vanne de fermeture (41), de la deuxième vanne de fermeture (42) et du détendeur intérieur (212),
une conduite de surrefroidissement (121) partant de la conduite de liquide (140) et raccordée à une entrée du compresseur (110) ; et
un détendeur de surrefroidissement (122) détendant un réfrigérant circulant dans la conduite de surrefroidissement (121) par réglage d'une ouverture ; et
où l'unité extérieure (10) comprend un détendeur extérieur (143, 144) disposé dans la conduite de liquide (140) et détendant le réfrigérant par réglage d'une ouverture,
**caractérisé en ce que** :
si le capteur de fuite (214) détecte une fuite de réfrigérant lors d'un processus de chauffage, le contrôleur (50) est prévu pour fermer pendant le processus de chauffage la première vanne de fermeture (41) et la deuxième vanne de fermeture (42), agrandir l'ouverture du détendeur intérieur (212), agrandir l'ouverture du détendeur de surrefroidissement (122), agrandir l'ouverture du détendeur extérieur (143 et 144), et arrêter le fonctionnement du compresseur (110).

2. Climatiseur selon la revendication 1, où, si le capteur de fuite (214) détecte une fuite de réfrigérant lors d'un processus de refroidissement, le contrôleur (50) est prévu pour fermer la deuxième vanne de fermeture (42), pour agrandir l'ouverture du détendeur intérieur (212), et pour maintenir le fonctionnement du compresseur (110) afin de renvoyer le réfrigérant vers l'unité extérieure (10).

3. Climatiseur selon la revendication 2, où, si le capteur de fuite (214) détecte une fuite de réfrigérant lors du processus de refroidissement, le contrôleur (50) est prévu pour fermer le détendeur extérieur (143, 144).

4. Climatiseur selon la revendication 2 ou la revendication 3, où, si la pression du système, mesurée par un capteur de pression, est instable, le contrôleur (50) est prévu pour réduire la fréquence du compresseur (110).

5. Climatiseur selon l'une des revendications 2 à 4, où, si un temps défini s'est écoulé après le début de la fermeture de la deuxième vanne de fermeture (42), ou si la pression du système atteint une valeur seuil, le contrôleur (50) est prévu pour fermer la première vanne de fermeture (41) et le détendeur intérieur (212), et pour arrêter le fonctionnement du compresseur (110).

6. Climatiseur selon la revendication 1 ou la revendication 5, où une pluralité d'unités intérieures (20) sont prévues,
où :
la première vanne de fermeture (41) et la deuxième vanne de fermeture (42) sont disposées dans chaque unité de la pluralité d'unités intérieures (20) ; et,
si le capteur de fuite (214) détecte une fuite de réfrigérant lors du processus de chauffage, le contrôleur (50) est prévu pour enregistrer la position d'une unité intérieure (20) dans laquelle la fuite du réfrigérant se produit, parmi la pluralité d'unités intérieures (20).

7. Climatiseur selon la revendication 6, où le contrôleur (50) est prévu pour ouvrir la première vanne de fermeture (41) et la deuxième vanne de fermeture (42) des unités intérieures (20), à l'exception de l'unité intérieure (20) dans laquelle la fuite du réfrigérant se produit, et pour activer à nouveau le compresseur (110).

8. Procédé de commande d'un climatiseur, ledit procédé comprenant :
l'activation (S110) d'un compresseur (110) pour exécuter un processus de chauffage ;
la détection des fuites (S210) d'un réfrigérant dans une unité intérieure (20) au moyen d'un capteur de fuite (214) ;
**caractérisé en ce que** ledit procédé comprend :
si la fuite de réfrigérant est détectée pendant le processus de chauffage (S130), la fermeture d'une première vanne de fermeture (41) et d'une deuxième vanne de fermeture (42) qui commandent un flux de réfrigérant entre l'unité intérieure (20) et une unité extérieure (10), l'agrandissement d'une ouverture d'un détendeur intérieur (212) et d'un détendeur de surrefroidissement (122) disposé dans une conduite de surrefroidissement (121) reliant une conduite de liquide (140) et une entrée du compresseur (110), la détente (S140) d'un détendeur extérieur (143, 144) disposé dans la conduite de liquide (140) et la détente du réfrigérant par réglage d'une ouverture, et l'arrêt (S150) du fonctionnement du compresseur (110) pour empêcher l'écoulement du réfrigérant dans l'unité intérieure (20).

9. Procédé selon la revendication 8, où une pluralité d'unités intérieures (20) est présentée,
où chaque unité de la pluralité d'unités intérieures (20) comprend la première vanne de fermeture (41) formée à une entrée, la deuxième vanne de fermeture (42) formée à une sortie, le détendeur intérieur (212) et le capteur de fuite (214),
où la détection de la fuite de réfrigérant dans les unités intérieures (20) au moyen du capteur de fuite (214) comprend en outre :
la mémorisation d'une position d'une unité intérieure (20), dans laquelle la fuite de réfrigérant se produit, parmi la pluralité d'unités intérieures (20) ; et,
si la fuite de réfrigérant est détectée, la fermeture de la première vanne de fermeture (41) et de la deuxième vanne de fermeture (42) de la pluralité d'unités intérieures (20), et l'agrandissement d'une ouverture du détendeur intérieur (212).

10. Procédé selon la revendication 9, comprenant en outre l'ouverture (S170) de la première vanne de fermeture (41) et de la deuxième vanne de fermeture (42) des unités intérieures (20), à l'exception de l'unité intérieure (20) dans laquelle la fuite du réfrigérant se produit, et la ré-activation du compresseur (110).
